(19) Europäisches Patentamt / European Patent Office / Office européen des brevets

(11) EP 3 759 169 B1

(12) # EUROPEAN PATENT SPECIFICATION

(45) Date of publication and mention of the grant of the patent:
**23.03.2022 Bulletin 2022/12**

(21) Application number: **19703375.6**

(22) Date of filing: **13.02.2019**

(51) International Patent Classification (IPC):
***C08L 23/12*** *(2006.01)* ***B32B 27/32*** *(2006.01)*
***C08F 210/06*** *(2006.01)* ***C08F 210/16*** *(2006.01)*
***B32B 27/08*** *(2006.01)*

(52) Cooperative Patent Classification (CPC):
(C-Sets available)
**C08L 23/12; B32B 27/08; B32B 27/32;**
B32B 2250/242; B32B 2307/40; B32B 2307/518; B32B 2307/7244; B32B 2307/7246; B32B 2439/70; C08F 210/06; C08F 210/16; C08L 2201/10; C08L 2201/14; C08L 2203/16; C08L 2205/02
(Cont.)

(86) International application number:
**PCT/EP2019/053512**

(87) International publication number:
**WO 2019/166223 (06.09.2019 Gazette 2019/36)**

(54) **PERMEABLE POLYMER FILM**

DURCHLÄSSIGE POLYMERFOLIE

FILM POLYMÈRE PERMÉABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2018 EP 18159267**

(43) Date of publication of application:
**06.01.2021 Bulletin 2021/01**

(73) Proprietor: **Basell Poliolefine Italia S.r.l.**
**20121 Milano (IT)**

(72) Inventors:
- **MASSARI, Paola**
  **44122 Ferrara (IT)**
- **FELISATI, Andrea**
  **44122 Ferrara (IT)**
- **IZZI, Marco**
  **60325 Frankfurt/M. (DE)**
- **CAVALIERI, Claudio**
  **44122 Ferrara (IT)**
- **TARTARI, Davide**
  **44122 Ferrara (IT)**
- **CAMURATI, Isabella Maria Vittoria**
  **44122 Ferrara (IT)**
- **CAPUTO, Tiziana**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 987 290**
**WO-A1-97/18084**
**WO-A1-2006/120190**
**WO-A1-2015/117948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 759 169 B1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08L 23/12, C08L 23/16;**
C08F 210/06, C08F 210/16, C08F 2500/12,
C08F 2500/17, C08F 2500/26, C08F 2500/27,
C08F 2500/35

## Description

FIELD OF THE INVENTION

The present disclosure relates to a polymer film especially suitable for the packaging of fresh foodstuff, like salad and vegetables.

BACKGROUND OF THE INVENTION

It is well known that polypropylene films, and particularly biaxially oriented polypropylene films (BOPP), are widely used for the packaging of foodstuff using automatic machines. In fact the said films are characterized by a particular good balance of processability ("machinability"), optical and mechanical properties, and low permeability to gases, in particular oxygen and carbon dioxide, and water vapour.

However for the packaging of fresh foods, in particular vegetables, greater gas transmission rates are necessary. As a matter of fact, the metabolic activity of vegetable cells continues also after these foods are harvested, cleaned and cut into pieces; therefore the cells still "breathe", consuming the oxygen and emitting carbon dioxide and water vapour. In a closed package this process quickly results in changes of the atmosphere inside the package, making it unsuitable for the continuation of the metabolic activity and favourable for the development of undesired micro-organisms.

Monolayer and multilayer films suitable for packaging fresh produce items that continue to respire after they are harvested are described in US6348271. The films therein described are characterized by the presence of at least one layer of a propylene resin composition comprising a propylene polymer component and up to 70% by weight of an ethylene/propylene copolymer. Additional layers made of propylene polymers can be present.

From another point of view propylene homopolymers are widely used in the production of multilayer films as core layer due to the particular features of said homopolymers. However the oxygen and water vapour transmission rate of the propylene homopolymers are quite low and can be increased.

It has now been found that a particularly good balance of oxygen, water vapour transmission rate and transparency is achieved by a composition comprising a specific propylene homopolymer with a polyolefin composition containing a propylene polymer and a propylene/ethylene copolymer having specific features.

SUMMARY OF THE INVENTION

Thus, the present disclosure provides a multilayer film comprising at least one core layer comprising a polypropylene composition comprising:

A) From 90 wt% to 50 wt%; of a propylene homopolymer having a fraction insoluble in xylene at 25°C greater than 90 wt%; and

B) From 10 wt% to 50 wt%; of a propylene ethylene copolymer having:

i) xylene soluble fraction at 25°C ranging from 14 wt% to 27 wt%;
ii) intrinsic viscosity of the fraction soluble in xylene at 25°C ranging from 1.0 to 2.4 dl/g;
iii) melt flow rate, MFR, measured according to ISO 1133 at 230 °C with a load of 2.16 kg, ranging from 1.0 g/10 min to 4.0 g/10 min;
iv) an ethylene derived units content ranging from 5.0 wt% to 12.0 wt%
v) the ethylene derived units content on the fraction insoluble in xylene at 25°C ranging from 2.5 wt% to 6.0 wt%;
vi) the ethylene derived units content on the fraction soluble in xylene at 25°C ranging from 15.2. wt% to 30.2 wt%
vii) the $C^{13}$ NMR sequences PEP measured on the fraction insoluble in xylene at 25°C ranging from 3.5mol% to 5.5mol% and the $C^{13}$ NMR sequences PEP measured on the fraction soluble in xylene at 25°C ranging from 11.0 mol% to 14.2 mol%;

the sum of the amounts of A) and B) being 100 wt% .

DETAILED DESCRIPTION OF THE INVENTION

Thus, the present disclosure provides a multilayer film comprising at least one core layer comprising a polypropylene composition comprising:

A) from 90 wt% to 50 wt%; , preferably from 85 wt% to 55 wt%; more preferably from 80 wt% to 65 wt% of a propylene homopolymer having a fraction insoluble in xylene at 25°C greater than 90 wt%; preferably greater than 94 wt%;

B) from 10wt% to 50 wt%; , preferably from 15 wt% to 45 wt%; more preferably from 20 wt% to 35 wt% of a propylene ethylene copolymer having:

i) xylene soluble fraction at 25°C ranging from 14 wt% to 27 wt%; preferably from 17 wt% to 25 wt%; more preferably from 18 wt% to 22 wt;
ii) intrinsic viscosity of the fraction soluble in xylene at 25°Cranging from 1.0 to 2.4 dl/g; preferably from 1.5 to 2.2 dl/g; more preferably from 1.7 to 2.1 dl/g;
iii) melt flow rate, MFR, measured according to ISO 1133 at 230 °C with a load of 2.16 kg, ranging from 1.0 g/10 min to 4.0 g/10 min; preferably from 1.4 g/10 min to 3.2 g/10 min; more preferably from 1.6 g/10 min to 2.1 g/10 min;
v) the ethylene derived units content on the fraction insoluble in xylene at 25°C ranging from 2.5 wt% to 6.0 wt%; preferably ranging from 3.2wt% to 5.2wt%; more preferably ranging from 3.5wt% to 5.0wt%;
vi) the ethylene derived units content on the fraction soluble in xylene at 25°C ranging from 15.2. wt% to 30.2 wt%; preferably ranging from 17.2wt% to 24.8wt%; more preferably ranging from 18.2wt% to 22.8wt%;
vii) the $C^{13}$ NMR sequences PEP measured on the fraction insoluble in xylene at 25°C ranging from 3.5 mol% to 5.5mol%; preferably ranging from 3.8mol% to 5.2mol%; more preferably ranging from 3.9mol% to 4.8 mol% and the $C^{13}$ NMR sequences PEP measured on the fraction soluble in xylene at 25°C ranging from 11.0 mol% to 14.2 mol%; preferably ranging from 11.5 mol% to 13.8 mol%; more preferably ranging from 12.3 mol% to 13.5 mol%;

the sum of the amounts of A) and B) being 100 wt%.

For the present disclosure, the term "copolymer" is referred to polymers containing only two kinds of comonomers, such as propylene and ethylene.

For the present disclosure "core layer" means the layer in a multilayer film that has no contact with the external environment, such as a film A/B/A wherein B is the core layer.

Preferably in the propylene ethylene copolymer B) the $C^{13}$ NMR sequences PEE measured on the fraction soluble in xylene at 25°C range from 7.2 mol% to 12.0 mol%; preferably range from 8.3 mol% to 11.2 mol%.

Preferably in the propylene ethylene copolymer B) the $C^{13}$ NMR sequences EEE measured on the fraction soluble in xylene at 25°C are lower than 6.5 mol% preferably in a range from 5.9 mol% to 2.0 mol%.

Preferably in the propylene ethylene copolymer B) the ratio rlr2 of the fraction unsoluble in xylene at 25°C measured with $C^{13}$ NMR is comprised between 2.4 and 4.6; preferably between 2.9 and 4.1; more preferably between 3.1 and 3.8.

The multilayer films of the present disclosure are characterized by having at least one of the core layers comprising the polypropylene composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA.

The combination and number of layers of the multilayer structures described are not limited. For instance, the multilayer structure can comprises 3- 11 layers or more, including 3-9 layers, 3-7 layers, and 3-5 layers, with combinations including A/B/A, A/B/C, A/B/C/B/A, and A/B/C/D/C/B/A, provided that at least one core layer such as B or D comprises a propylene composition of the present disclosure.

In certain embodiments, the number of layers of the multilayer film of the present disclosure is 3 or 5, wherein at least one core layer comprises the propylene composition of the present disclosure. For instance, structures such as A/B/A or A/B/C, wherein B is the propylene composition of the present disclosure, are possible.

Component A is a commercial homopolymer of propylene such as Moplen HP522H, Moplen HP520H, Moplen HP525J, or Moplen HP526J.

Propylene ethylene copolymer component B) is obtained with a process being carried out in a reactor having two interconnected polymerization zones, a riser and a downcomer, wherein the growing polymer particles:

(a) flow through the first of said polymerization zones, the riser, under fast fluidization conditions in the presence of propylene and of ethylene;

(b) leave the riser and enter the second of said polymerization zones, the downcomer, through which they flow downward in a densified form in the presence of propylene and of ethylene, wherein the concentration of ethylene in the downcomer is higher than in the riser;

(c) leave the downcomer and are reintroduced into the riser, thus establishing a circulation of polymer between the riser and the downcomer.

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present disclosure, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the disclosure, so that liquid propane is unavoidably contained in the barrier stream, which is fed to the upper part of the downcomer.

In one embodiment, the barrier steam comprises:

i. from 10 to 100% by mol of propylene;

ii. from 0 to 80% by mol of ethylene;

iii. from 0 to 30% by mol of propane;

iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones.

Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. For example, in both riser and downcomer the temperature is generally comprised between 60°C and 120°C, while the pressure can range from 5 to 40 bar.

The process for preparing the propylene ethylene copolymer component B) of the present disclosure is carried

out in presence of a highly stereospecific heterogeneous Ziegler-Natta catalyst. The Ziegler-Natta catalysts suitable for producing the propylene ethylene copolymer component B) of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I):

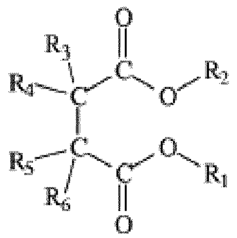

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.

$R^1$ and $R^2$ are preferably $C_1$-$C_8$ alkyl, cycloalkyl, aryl, arylalkyl and alkylaryl groups.

Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.

According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in U.S. Pat. Nos 4,399,054 and 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with Tic4 can be carried out one or more times. The internal donor can be added during the treatment with $TiCl_4$ and the treatment with the electron donor compound can be repeated one or more times. Generally, the succinate of formula (I) is used in molar ratio with respect to the MgC12 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000A generally ranges from 0.3 to 1.5 $cm^3/g$, preferably from 0.45 to 1 $cm^3/g$.

The organo-aluminum compound is preferably an alkyl-Al selected from the trialkyl aluminum compounds such

as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropylmetildimethoxysilane. The external electron donor compound is used in such an amount to give a molar ratio between the organo-aluminum compound and said electron donor compound of from 0.1 to 500; prerably from 1 to 100; more preferably from 2 to 50.

Without to be bound by a theory it is believed that the particular polymerization process used for obtaining component B) gives rise to a polymer having a particular crystallinity due to the distribution of ethylene in the xylene soluble and insoluble fraction at 25°C.

Thus, the multilayer film of the present disclosure shows good oxygen and water transmission together with a particularly high transparency. so that it can be advantageously used for the packaging of fresh foodstuff, like salad and vegetables.

Preferably the ratio amount of component A)/haze of the multilayer film object of the present disclosure is higher than 11; more preferably is higher than 13; even more preferably is higher than 15;

All the film layers may also contain the additives that are commonly used for the film manufacturing, and especially for the films used for packaging applications with automatic machines, such as anti-oxidants, process stabilizers, slip agents, antistatic agents, antiblock agents, and antifog agents.

Independently from the structure of the film, the overall film thickness is preferably from 9 to 100 microns, the thickness of the layer(s) A) is preferably from 0.5 to 20 microns, and that of the layer(s) B), typically used as inner layer(s), is from 9.5 to 99.5 microns.

The said films are produced by using processes well known in the art.

In particular, extrusion processes can be used.

In said extrusion processes the polymer materials to be used for the various layers are molten in different extruders and extruded through a narrow die gap. Subsequent from the exit from the die, the material can be cooled, heated and optionally oriented in several ways or in combination. Examples of such processes are cast, blown, extrusion coating, uniaxially oriented, simultaneous biaxially oriented, and sequential biaxially oriented film processes.

Specific examples of such processes are the blown film and BOPP processes herein below explained.

Blown Film

The molten polymer materials are forced through a circular shaped die.

The extrudate which is drawn off has the shape of a tube, which is inflated by air to form a tubular bubble. The bubble is cooled and collapsed before winding-up.

BOPP

The molten polymer materials are forced continuously through a narrow die. The extruded molten material is pulled away from the die and cooled, then heated again and stretched both in the Machine Direction (MD) and in the Transverse Direction (TD). After the stretching process, the film is cooled and then wound-up.

The following examples are given to illustrate, not to limit, the present disclosure:

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Determination of the Haze**

Multilayer film speciments prepared as described below have been used. The haze value is measured using a Gardner photometric unit connected to a Hazemeter type UX-10 or an equivalent instrument having G.E. 1209 light source with filter "C". Reference samples of known haze are used for calibrating the instrument according to ASTM D1003.

**Ethylene content in the copolymers**

$^{13}C$ NMR spectra were acquired on a Bruker AV-600 spectrometer equipped with cryoprobe, operating at 160.91 MHz in the Fourier transform mode at 120 °C.
The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^{1}H$-$^{13}C$ coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T\beta\beta/S$$

$$PPE = 100\ T\beta\delta/S$$

$$EPE = 100\ T\delta\delta/S$$

$$PEP = 100\ S\beta\beta/S$$

$$PEE = 100\ S\beta\delta/S$$

$$EEE = 100\ (0.25\ S\gamma\delta + 0.5\ S\delta\delta)/S$$

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:
E% mol = 100 * [PEP+PEE+EEE]The weight percentage of ethylene content was evaluated using the following equation:

$$E\%\ wt. = \frac{100 * E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm).

**Oxygen transmission (OTR)**

Measured on a Mocon OX-TRAN 2/60 unit, commercially available from Mocon, Inc., according to ASTM D3985-05(2010)e1 at 23°C, 0% relative humidity (RH), and 100% $O_2$.

**Water vapor transmission (WVTR)**

Measured on a Mocon PERMATRAN W3/33 unit, commercially available from Mocon, Inc. according to ASTM F1249 at 37.8°C and 90% relative humidity (RH).

**Component A**

Component A is the commercial grade Moplen HP522H a propylene homopolymer sold by LyondellBasell having a MFR of 2.0 g/10 min and a solubility in xylene at 25°C of 4.9 wt%.

**Component B1 (according to the disclosure)**

Preparation of the Ziegler-Natta solid catalyst component

The Ziegler-Natta catalyst was prepared according to Example 5, lines 48-55, of the European Patent EP728769B1.

Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1.

Table 1

| | | |
|---|---|---|
| Component B 1 | | |
| **PRECONTACT** | | |
| Temperature | °C | 15 |
| Residence Time | min | 13 |
| TEAL/catalyst | wt/wt | 6 |
| TEAL/Ext. Donor | g/g | 4 |
| **PREPOLYMERIZATION** | | |
| Temperature | °C | 20 |
| Residence Time | min | 8 |
| **POLYMERIZATION** | | |
| Temperature | bar-g | 65 |
| Pressure | bar-g | 24 |
| Residence Time | min | 120 |
| Mileage | kg/kg | 37000 |
| Split holdup riser | wt% | 40 |
| Split holdup downcomer | wt% | 60 |
| $C_2^-$/ $C_2^-$+ $C3^-$ riser | mol/mol | 0.018 |
| $C_2^-$/ $C_2^-$+ $C3^-$ downcomer | mol/mol | 0.041 |
| $H_2/C_3^-$ riser | mol/mol | 0.023 |
| $H_2/C_2^-$ downcomer | mol/mol | 0.23 |

**Component B2 and B3 (comparative)**

Component B2 has been obtained by blending 30 % of a propylene copolymer sold by LyondellBasell with the trade name of Adflex C200F and 70% of a propylene random copolymer sold by LyondellBasell with the trade name of Moplen RP320M.

Component B3 is a propylene copolymer sold by LyondellBasell with the trade name of Adflex C200F the properties of components B1, B2 and B3) are reported in Table 2.

Table 2

| | | B1 | B2 | B3 |
|---|---|---|---|---|
| Ethylene content | Wt% | 7.6 | 6.6 | 14.9 |
| Xylene soluble at 25°C | Wt% | 19.4 | 19.4 | 51.2 |
| Intrinsic viscosity xylene solubles | dl/g | 1.94 | 1.96 | 2.24 |
| MFR | g/10 min | 1.8 | | 6.0 |
| Ethylene in the fraction insoluble in xylene at 25°C | Wt% | 4.3 | 3.1 | 6.2 |
| Ethylene in the fraction soluble in xylene at 25°C | Wt% | 20.1 | 25.0 | 24 |
| PEP sequences in the fraction insoluble in xylene at 25°C | Mol% | 4.3 | 3.1 | 3.7 |
| PEP sequences in the fraction soluble in xylene at 25°C | Mol% | 12.9 | 12.3 | 12.1 |
| PEE sequences in the fraction soluble in xylene at 25°C | Mol% | 9.7 | 12.7 | 12.5 |

(continued)

| | | B1 | B2 | B3 |
|---|---|---|---|---|
| EEE sequences in the fraction soluble in xylene at 25°C | Mol% | 4.8 | 8.4 | 7.7 |
| rlr2 in the fraction insoluble in xylene at 25°C | | 3.6 | 5.4 | 6.8 |

Table 2 shows that components B1 and B2 have different PEP PEE and EEE sequences even if the ethylene content and the xylene soluble fraction are the same.

**Examples 1-2 and Comparative Examples 3-4**

Components A and B have been blended in various percentages, as reported in Table 3:

Table 3

| components | | Ex 1 | Comp 2 | Ex 3 | Comp 4 |
|---|---|---|---|---|---|
| A | Wt% | 70 | 70 | 60 | 60 |
| B1 | Wt% | 30 | | 40 | |
| B3 | Wt% | | 30 | | 40 |

BOPP A/B/A films were produced. The B layer was made with the compositions of Examples 1-2 and Comparative Examples 3-4, while the A layer was Moplen HP522H. The thickness of the films was 30 microns, with the A layer being 1 micron. The results of the analysis of the films are reported in Table 4.

Table 4

| components | | Ex 1 | Comp 2 | Ex 3 | Comp 4 |
|---|---|---|---|---|---|
| WVTR | $cc/m^2$ x day | 5.97 | 6.44 | 6.1 | 6.99 |
| OTR | $cc/m^2$ x day | 2338 | 2394 | 2485 | 3359 |
| haze | % | 1.67 | 5.20 | 2.30 | 6.32 |

Table 4 clearly shows that the OTR and the WVTR of the multilayer film according to the present disclosure is comparable with that on of comparative examples but the haze is considerably decreased.

## Claims

**1.** A multilayer film comprising at least one core layer comprising a polypropylene composition comprising:

A) From 90 wt% to 50 wt%; of a propylene homopolymer having a fraction insoluble in xylene at 25°C greater than 90 wt%;
B) From 10 wt% to 50 wt%; of a propylene ethylene copolymer having:

i) xylene soluble fraction at 25°C ranging from 14 wt% to 27 wt%
ii) intrinsic viscosity of the fraction soluble in xylene at 25°C ranging from 1.0 to 2.4 dl/g;
iii) melt flow rate, MFR, measured according to ISO 1133 at 230 °C with a load of 2.16 kg, ranging from 1.0 g/10 min to 4.0 g/10 min;
iv) an ethylene derived units content ranging from 5.0 wt% to 12.0 wt%
v) the ethylene derived units content on the fraction insoluble in xylene at 25°C ranging from 2.5 wt% to 6.0 wt%;
vi) the ethylene derived units content on the fraction soluble in xylene at 25°C ranging from 15.2. wt% to 30.2 wt%
vii) the $C^{13}$ NMR sequences PEP measured on the fraction insoluble in xylene at 25°C ranging from 3.5mol% to 5.5mol% and the $C^{13}$ NMR sequences PEP measured on the fraction soluble in xylene at 25°C ranging

from 11.0 mol% to 14.2 mol%;

the sum of A) and B) being 100wt%.

2. The multilayer film according to claim 1 wherein the propylene composition comprises from 85 wt% to 55 wt% of component A) and from 15 wt% to 45 wt% of component B).

3. The multilayer film according to anyone of claims 1-2 wherein in component B) the xylene soluble fraction at 25 °C ranges from 17 wt% to 25 wt%.

4. The multilayer film according to anyone of claims 1-3 wherein in component B) the intrinsic viscosity of the fraction soluble in xylene at 25 °C ranges from 1.5 to 2.2 dl/g.

5. The multilayer film according to anyone of claims 1-4 wherein in component B) the melt flow rate, MFR, measured according to ISO 1133 at 230 °C with a load of 2.16 kg, ranges from 1.4 g/10 min to 3.2 g/10 min.

6. The multilayer film according to anyone of claims 1-5 wherein in component B) the $C^{13}$ NMR sequences PEP measured on the fraction insoluble in xylene at 25°C ranges from 3.8mol% to 5.2mol%; and the $C^{13}$ NMR sequences PEP measured on the fraction soluble in xylene at 25°C ranges from 11.5 mol% to 13.8 mol.

7. The multilayer film according to anyone of claims 1-6 wherein in component B) the $C^{13}$ NMR sequences PEP measured on the fraction insoluble in xylene at 25°C ranges 3.9mol% to 4.8 mol%; and the $C^{13}$ NMR sequences PEP measured on the fraction soluble in xylene at 25°C ranges 12.3 mol% to 13.5 mol%.

8. The multilayer film according to anyone of claims 1-7 wherein in component B) the ethylene derived units content on the fraction insoluble in xylene at 25°C ranges from 3.2 wt% to 5.2 wt%.

9. The multilayer film according to anyone of claims 1-8 wherein in component B) the ethylene derived units content on the fraction soluble in xylene at 25°C ranges from 17.2 wt% to 24.8wt%.

10. The multilayer film according to anyone of claims 1-9 wherein in component B) the $C^{13}$ NMR sequences PEE measured on the fraction soluble in xylene at 25°C range from 7.2 mol% to 12.0 mol%;

11. The multilayer film according to anyone of claims 1-10 wherein in component B) the $C^{13}$ NMR sequences EEE measured on the fraction soluble in xylene at 25°C are lower than 6.5 mol%.

12. The multilayer film according to anyone of claims 1-11 wherein in component B) the ratio r1/r2 of the fraction unsoluble in xylene at 25°C measured with $C^{13}$ NMR is comprised between 2.4 and 4.6

13. The multilayer film according to anyone of claims 1-12 wherein in component A) the fraction insoluble in xylene at 25 °C is greater than 94 wt%.

14. The multilayer film according to anyone of claims 1-13 wherein the ratio amount of component A)/haze of the multilayer film is higher than 11.

**Patentansprüche**

1. Mehrschichtige Folie, die mindestens eine Kernschicht umfasst, die eine Polypropylenzusammensetzung umfasst, welche umfasst:

A) 90 Gew.% bis 50 Gew.%, eines Propylenhomopolymers mit einer in Xylol bei 25 °C unlöslichen Fraktion größer als 90 Gew.%;
B) 10 Gew.% bis 50 Gew.% eines Propylen/Ethylen-Copolymers mit:

i) einer in Xylol bei 25 °C löslichen Fraktion im Bereich von 14 Gew.% bis 27 Gew.%;
ii) einer Grenzviskosität der in Xylol bei 25 °C löslichen Fraktion im Bereich von 1,0 und 2,4 dl/g;
iii) einer Schmelzflussrate, MFR, gemessen gemäß ISO 1133 bei 230 °C unter einer Last von 2,16 kg, im

Bereich von 1,0 g/10 min bis 4,0 g/10 min;
iv) einem Gehalt an von Ethylen abgeleiteten Einheiten im Bereich von 5,0 Gew.% bis 12,0 Gew.%;
v) einem Gehalt an von Ethylen abgeleiteten Einheiten in der in Xylol bei 25 °C unlöslichen Fraktion im Bereich von 2,5 Gew.% bis 6,0 Gew.%;
vi) einem Gehalt an von Ethylen abgeleiteten Einheiten in der in Xylol bei 25 °C löslichen Fraktion im Bereich von 15,2 Gew.% bis 30,2 Gew.%;
vii) wobei der $C^{13}$-NMR-Sequenz-PEP, gemessen in der in Xylol bei 25 °C unlöslichen Fraktion, im Bereich von 3,5 Mol.% bis 5,5 Mol.% liegt, und der $C^{13}$-NMR-Sequenz-PEP, gemessen in der in Xylol bei 25 °C löslichen Fraktion, im Bereich von 11,0 Mol.% bis 14,2 Mol.% liegt;

wobei die Summe von A) und B) 100 Gew.% beträgt.

2. Mehrschichtfolie nach Anspruch 1, wobei die Propylenzusammensetzung 85 Gew.% bis 55 Gew.% Komponente A) und 15 Gew.% bis 45 Gew.% Komponente B) umfasst.

3. Mehrschichtfolie nach einem der Ansprüche 1 bis 2, wobei in Komponente B) die in Xylol bei 25 °C lösliche Fraktion im Bereich von 17 Gew.% bis 25 Gew.% liegt.

4. Mehrschichtfolie nach einem der Ansprüche 1 bis 3, wobei in Komponente B) die Grenzviskosität der in Xylol bei 25 °C löslichen Fraktion im Bereich von 1,5 dl/g bis 2,2 dl/g liegt.

5. Mehrschichtfolie nach einem der Ansprüche 1 bis 4, wobei in Komponente B) die Schmelzflussrate, MFR, gemessen gemäß ISO 1133 bei 230 °C unter einer Last von 2,16 kg, im Bereich von 1,4 g/10 min bis 3,2 g/10 min liegt.

6. Mehrschichtfolie nach einem der Ansprüche 1 bis 5, wobei in Komponente B) der $C^{13}$-NMR-Sequenz-PEP, gemessen in der in Xylol bei 25 °C unlöslichen Fraktion, im Bereich von 3,8 Mol.% bis 5,2 Mol.% liegt, und der $C^{13}$-NMR-Sequenz-PEP, gemessen in der in Xylol bei 25 °C löslichen Fraktion, im Bereich von 11,5 Mol.% bis 13,8 Mol.% liegt.

7. Mehrschichtfolie nach einem der Ansprüche 1 bis 6, wobei in Komponente B) der $C^{13}$-NMR-Sequenz-PEP, gemessen in der in Xylol bei 25 °C unlöslichen Fraktion, im Bereich von 3,9 Mol.% bis 4,8 Mol.% liegt, und der $C^{13}$-NMR-Sequenz-PEP, gemessen in der in Xylol bei 25 °C löslichen Fraktion, im Bereich von 12,3 Mol.% bis 13,5 Mol.% liegt.

8. Mehrschichtfolie nach einem der Ansprüche 1 bis 7, wobei in Komponente B) der Gehalt an von Ethylen abgeleiteten Einheiten in der in Xylol bei 25 °C unlöslichen Fraktion im Bereich von 3,2 Gew.% bis 5,2 Gew.% liegt.

9. Mehrschichtfolie nach einem der Ansprüche 1 bis 8, wobei in Komponente B) der Gehalt an von Ethylen abgeleiteten Einheiten in der in Xylol bei 25 °C löslichen Fraktion im Bereich von 17,2 Gew.% bis 24,8 Gew.% liegt.

10. Mehrschichtfolie nach einem der Ansprüche 1 bis 9, wobei in Komponente B) der $^{13}C$-NMR-Sequenz-PEE, gemessen in der in Xylol bei 25 °C löslichen Fraktion, im Bereich von 7,2 Mol.% bis 12,0 Mol.% liegt.

11. Mehrschichtfolie nach einem der Ansprüche 1 bis 10, wobei in Komponente B) der $^{13}C$-NMR-Sequenz-EEE, gemessen in der in Xylol bei 25 °C löslichen Fraktion, kleiner als 6,5 Mol.% ist.

12. Mehrschichtfolie nach einem der Ansprüche 1 bis 11, wobei in Komponente B) das Verhältnis r1/r2 der in Xylol bei 25 °C unlöslichen Fraktion, gemessen mittels $C^{13}$-NMR, zwischen 2,4 und 4,6 liegt.

13. Mehrschichtfolie nach einem der Ansprüche 1 bis 12, wobei in Komponente A) die in Xylol bei 25 °C unlösliche Fraktion größer als 94 Gew.% ist.

14. Mehrschichtfolie nach einem der Ansprüche 1 bis 13, wobei die Verhältnismenge von Komponente A)/Trübung der Mehrschichtfolie größer als 11 ist.

## Revendications

1. Film multicouche comprenant au moins une couche centrale comprenant une composition de polypropylène comprenant :

A) 90 % en poids à 50 % en poids d'un homopolymère de propylène présentant une fraction insoluble dans le xylène à 25 °C supérieure à 90 % en poids ;
B) 10 % en poids à 50 % en poids d'un copolymère de propylène-éthylène présentant :

i) une fraction soluble dans le xylène à 25 °C située dans la plage de 14 % en poids à 27 % en poids ;
ii) une viscosité intrinsèque de la fraction soluble dans le xylène à 25 °C située dans la plage de 1,0 à 2,4 dl/g ;
iii) un indice de fluidité à chaud, MFR, mesuré selon la norme ISO 1133 à 230 °C sous une charge de 2,16 kg, situé dans la plage de 1,0 g/10 min à 4,0 g/10min ;
iv) une teneur en motifs dérivés de l'éthylène située dans la plage de 5,0 % en poids à 12,0 % en poids ;
v) la teneur en motifs dérivés de l'éthylène sur la fraction insoluble dans le xylène à 25° C située dans la plage de 2,5 % en poids à 6,0 % en poids ;
vi) la teneur en motifs dérivés de l'éthylène sur la fraction soluble dans le xylène à 25 °C située dans la plage de 15,2 % en poids à 30,2 % en poids ;
vii) les séquences $C^{13}$-RMN de PEP mesurées sur la fraction insoluble dans le xylène à 25 °C situées dans la plage de 3,5 % en mole à 5,5 % en mole et les séquences $C^{13}$-RMN de PEP mesurées sur la fraction soluble dans le xylène à 25 °C situées dans la plage de 11,0 % en mole à 14,2 % en mole ;

la somme de A) et de B) valant 100 % en poids.

**2.** Film multicouche selon la revendication 1, la composition de propylène comprenant 85 % en poids à 55 % en poids de constituant A) et 15 % en poids à 45 % en poids de constituant B).

**3.** Film multicouche selon l'une quelconque des revendications 1 à 2, où, dans le constituant B), la fraction soluble dans le xylène à 25 °C est située dans la plage de 17 % en poids à 25 % en poids.

**4.** Film multicouche selon l'une quelconque des revendications 1 à 3, où, dans le constituant B), la viscosité intrinsèque de la fraction soluble dans le xylène à 25 °C est située dans la plage de 1,5 à 2,2 dl/g.

**5.** Film multicouche selon l'une quelconque des revendications 1 à 4, où, dans le constituant B), l'indice de fluidité à chaud, MFR, mesuré selon la norme ISO 1133 à 230 °C sous une charge de 2,16 kg, est situé dans la plage de 1,4 g/10 min à 3,2 g/10 min.

**6.** Film multicouche selon l'une quelconque des revendications 1 à 5, où, dans le constituant B), les séquences $C^{13}$-RMN de PEP mesurées sur la fraction insoluble dans le xylène à 25 °C sont situées dans la plage de 3,8 % en mole à 5,2 % en mole ; et les séquences de $C^{13}$-RMN de PEP mesurées sur la fraction soluble dans le xylène à 25 °C sont situées dans la plage de 11,5 % en mole à 13,8 mol.

**7.** Film multicouche selon l'une quelconque des revendications 1 à 6, où, dans le constituant B), les séquences $C^{13}$-RMN de PEP mesurées sur la fraction insoluble dans le xylène à 25 °C sont situées dans la plage de 3,9 % en mole à 4,8 % en mole ; et les séquences $C^{13}$-RMN de PEP mesurées sur la fraction soluble dans le xylène à 25 °C sont situées dans la plage de 12,3 % en mole à 13,5 % en mole.

**8.** Film multicouche selon l'une quelconque des revendications 1 à 7, où, dans le constituant B), la teneur en motifs dérivés de l'éthylène sur la fraction insoluble dans le xylène à 25 °C est située dans la plage de 3,2 % en poids à 5,2 % en poids.

**9.** Film multicouche selon l'une quelconque des revendications 1 à 8, où, dans le constituant B), la teneur en motifs dérivés de l'éthylène sur la fraction soluble dans le xylène à 25 °C est située dans la plage de 17,2 % en poids à 24,8 % en poids.

**10.** Film multicouche selon l'une quelconque des revendications 1 à 9, où, dans le constituant B), les séquences $C^{13}$-RMN de PEE mesurées sur la fraction soluble dans le xylène à 25 °C sont situées dans la plage de 7,2 % en mole à 12,0 % en mole.

**11.** Film multicouche selon l'une quelconque des revendications 1 à 10, où, dans le constituant B), les séquences $C^{13}$-RMN de EEE mesurées sur la fraction soluble dans le xylène à 25 °C sont inférieures à 6,5 % en mole.

**12.** Film multicouche selon l'une quelconque des revendications 1 à 11, où, dans le constituant B), le rapport r1/r2 de

la fraction insoluble dans le xylène à 25 °C mesuré par $C^{13}$-RMN est situé entre 2,4 et 4,6

13. Film multicouche selon l'une quelconque des revendications 1 à 12, où, dans le constituant A), la fraction insoluble dans le xylène à 25 °C est supérieure à 94 % en poids.

14. Film multicouche selon l'une quelconque des revendications 1 à 13, le rapport constituant A)/voile du film multicouche étant supérieur à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6348271 B
- EP 45977 A
- EP 361494 A
- EP 728769 A
- EP 1272533 A
- WO 00163261 A
- US 4399054 A
- US 4469648 A
- EP 395083 A
- WO 98144001 A
- EP 728769 B1
- EP 782587 A


### Non-patent literature cited in the description


- **D. GELDART.** Gas Fluidisation Technology. J. Wiley & Sons Ltd, 1986, vol. 155
- **HUGGINS, M.L.** *J. Am. Chem. Soc.,* 1942, vol. 64, 2716
- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536